(19) Europäisches Patentamt
European Patent Office
Office européen des brevets

(11) **EP 3 655 920 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **18731048.7**

(22) Anmeldetag: **11.06.2018**

(51) Int Cl.:
**G06T 7/00** (2017.01)

(86) Internationale Anmeldenummer:
**PCT/EP2018/065317**

(87) Internationale Veröffentlichungsnummer:
**WO 2019/015877 (24.01.2019 Gazette 2019/04)**

(54) **VERFAHREN UND VORRICHTUNG ZUR BEWERTUNG VON BILDAUSSCHNITTEN FÜR EINE KORRESPONDENZBILDUNG**

METHOD AND DEVICE FOR ANALYSING IMAGE SECTIONS FOR A CORRESPONDENCE CALCULATION

PROCÉDÉ ET DISPOSITIF POUR L'ÉVALUATION DE SECTIONS D'IMAGES POUR UN CALCUL DE CORRESPONDANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2017 DE 102017212339**

(43) Veröffentlichungstag der Anmeldung:
**27.05.2020 Patentblatt 2020/22**

(73) Patentinhaber: **Robert Bosch GmbH
70442 Stuttgart (DE)**

(72) Erfinder: **SIMON, Stephan
31079 Sibbesse (DE)**

(56) Entgegenhaltungen:
**US-A1- 2015 269 735**

- **BONATO V ET AL: "A Parallel Hardware Architecture for Scale and Rotation Invariant Feature Detection", IEEE TRANSACTIONS ON CIRCUITS AND SYSTEMS FOR VIDEO TECHNOLOGY, INSTITUTE OF ELECTRICAL AND ELECTRONICS ENGINEERS, USA, Bd. 18, Nr. 12, 1. Dezember 2008 (2008-12-01), Seiten 1703-1712, XP011238329, ISSN: 1051-8215, DOI: 10.1109/TCSVT.2008.2004936**
- **-H IRENE YU-HUA GU ET AL: "Multiresolution Feature Detection Using a Family of Isotropic Bandpass Filters", IEEE TRANSACTIONS ON SYSTEMS, MAN AND CYBERNETICS. PART B:CYBERNETICS, IEEE SERVICE CENTER, PISCATAWAY, NJ, US, Bd. 32, Nr. 4, 1. August 2002 (2002-08-01), XP011079921, ISSN: 1083-4419**

EP 3 655 920 B1

**Beschreibung**

Stand der Technik

Die vorliegende Erfindung betrifft ein Verfahren und eine Vorrichtung zur Bewertung von Bildausschnitten für eine Korrespondenzbildung.

Dem Thema Korrespondenzbildung begegnet man im Bereich Computer Vision insbesondere beim Optischen Fluss und bei der Stereo-Disparität. Beim Optischen Fluss (OF) werden Korrespondenzen in zeitlicher Richtung gebildet, indem Zuordnungen zwischen Koordinaten in einem ersten Bild und Koordinaten in einem zweiten Bild bestimmt werden. Eine solche Korrespondenz gibt dann an, wie sich die Projektion eines Punktes in der 3D-Szene ins 2D-Bild von einer alten Koordinate zu einer neuen Koordinate weiterbewegt hat. Dabei kann die Bewegung im Bild durch die Bewegung des Szenenpunktes oder durch die Bewegung der Kamera hervorgerufen sein, oder beides zugleich. Bei Stereo-Vision werden die beiden Bilder etwa zeitgleich von zwei Kameras erfasst, die sich an unterschiedlichen Orten befinden. Die relative Anordnung der Kameras ist dabei in der Regel fest und bekannt.

Stereokamerasysteme sind beispielsweise aus der EP2275990B1 und der WO2008/087104A1 bekannt. Die Patentschrift US2015/269735 A1 offenbart die Bestimmung von Luminanzrauschparametern, und eine Schwellenwertbestimmung für die Bestimmung von Bildmerkmalen.

Die Korrespondenzbildung ermöglicht beispielsweise die Verfolgung einer Relativbewegung über die Zeit oder die Bestimmung der Entfernung zum Punkt in der 3D-Szene mittels Triangulation.

Dem im Bildsignal vorhandenen Rauschen wird bei den Verfahren im Stand der Technik meistens wenig bis gar keine Aufmerksamkeit gewidmet. In schwach texturierten Bildbereichen, wie beispielsweise im Bereich des Himmels oder auf der Straße oder auf glatten Fassaden oder in Schattenbereichen reicht eine vorhandene Textur der Szene oftmals nicht aus, um sich gegenüber dem im Signal des Bildsensors vorhandenen unvermeidbaren Rauschen durchzusetzen. Bedingt durch das ungünstige Signal-zu-Rausch-Verhältnis (SNR, Signal-to-Noise Ratio) kann die Bestimmung von Korrespondenzen in diesen Bildbereichen schwierig bis unmöglich sein.

Viele der anerkannten Verfahren zur Korrespondenzbildung nutzen daher Maßnahmen zur Regularisierung, insbesondere unter Hinzunahme von Glattheits-Annahmen. Hintergrund ist dabei die Beobachtung, dass eine Bildszene im Wesentlichen aus Flächenstücken zusammengesetzt ist, innerhalb derer das gesuchte (dichte) Feld von Korrespondenzen (Opt. Fluss-Feld oder Stereo-Disparitäts-Feld) einen im Wesentlichen glatten Verlauf aufweist, also überwiegend langsam und stetig von Bildpunkt zu Bildpunkt variiert.

Somit ist es möglich und gängige Praxis, in Bildbereichen mit schwacher Textur einer glatten "Interpolation" den Vorzug zu geben gegenüber der echten Messung durch Vergleich ("Matching") von Texturen von Bild zu Bild. Meist ist dieser Übergang kontinuierlich: Bei guter Textur überwiegt der Einfluss des Matchings (also echte Messung in den Bilddaten), bei schwacher Textur überwiegt die Interpolation. Dieses Vorgehen führt überwiegend sogar zu korrekten Ergebnissen, insbesondere wenn die zuvor genannten Annahmen erfüllt sind und die erfassten Bildszenen günstige Eigenschaften aufweisen. Jedoch können die Ergebnisse auch grob falsch sein.

Insbesondere für sicherheitskritische Funktionen (z. B. Kamera-basierte Fahrerassistenz), die auch unter schwierigen Umgebungsbedingungen keine falschen Ergebnisse liefern sollten, sind diese Ansätze daher nicht geeignet.

Offenbarung der Erfindung

Die Erfindung ist durch die Ansprüche definiert. Das erfindungsgemässe Verfahren und die erfindungsgemässe Vorrichtung sind durch die Hauptansprüche 1 und 8 definiert, weitere Ausführungsformen sind in den abhängigen Ansprüchen definiert. Grob gesagt, ein Verfahren zur Bewertung von Bildausschnitten für eine Korrespondenzbildung umfasst ein Empfangen eines Bildsignals von einem Bildsensor, ein Auswerten des Bildsignals, um zu bestimmen, in welchem Umfang für einen ausgewählten Bereich des Bildsensors ein durch den Bildsensor verursachtes Rauschen vorliegt, und ein Ermitteln eines resultierenden Bewertungsparameters für einen Bildausschnitt eines von dem Bildsensor erfassten Bildes, welcher beschreibt, ob der Bildausschnitt für eine Korrespondenzbildung geeignet ist, wobei der Bildausschnitt dem ausgewählten Bereich des Bildsensors entspricht und wobei der resultierende Bewertungsparameter basierend auf dem bestimmten Umfang des Rauschens ermittelt wird.

Die erfindungsgemäße Vorrichtung zur Bewertung von Bildausschnitten für eine Korrespondenzbildung umfasst eine Eingangsstufe, welche dazu eingerichtet ist, ein Bildsignal von einem Bildsensor zu empfangen, und eine Auswertungsstufe, welche dazu eingerichtet ist das Bildsignal auszuwerten, um zu bestimmen, in welchem Umfang für einen ausgewählten Bereich des Bildsensors ein durch den Bildsensor verursachtes Rauschen vorliegt, und einen resultierenden Bewertungsparameter für einen Bildausschnitt eines von dem Bildsensor erfassten Bildes zu ermitteln, welcher beschreibt, ob der Bildausschnitt für eine Korrespondenzbildung geeignet ist, wobei der Bildausschnitt dem ausgewählten Bereich des Bildsensors entspricht und wobei der resultierende Bewertungsparameter basierend auf dem bestimmten Umfang des Rauschens ermittelt wird.

Unter Korrespondenzbildung ist zu verstehen, dass einander entsprechende Merkmale in zwei einzelnen Bildern ermittelt werden, wobei die einzelnen Bilder bevorzugt in einer zeitlichen Abfolge aufgenommen wurden oder etwa zeitgleich von mehreren Kamerapositionen aufgenommen wurden.

Das Bildsignal wird von einem Bildsensor empfangen. Das bedeutet, dass die erfindungsgemäße Vorrichtung bevorzugt eine Schnittstelle für einen Bildsensor umfasst, oder aber auch den Bildsensor selbst umfasst. Das Empfangen des Bildsignals erlaubt jedoch auch eine Zwischenspeicherung des Bildsignals. So kann beispielsweise das Bildsignal aufgezeichnet werden und der erfindungsgemäßen Vorrichtung mittels eines Speichermediums bereitgestellt werden. Auch kann das Bildsignal mittels einer Übertragungstechnik von dem Bildsensor empfangen werden, beispielsweise mittels einer Funkübertragung.

Der ausgewählte Bereich des Bildsensors ist ein beliebiger Bereich einer aktiven Fläche des Bildsensors. Dabei ist der ausgewählte Bereich insbesondere auf einige Bildpunkte, auch Pixel genannt, des Bildsensors beschränkt. Ein Bildausschnitt, welche dem ausgewählten Bereich des Bildsensors entspricht ist ein solcher Bereich eines von dem Bildsensor erfassten Bildes, dessen Bildpunkte durch die dem ausgewählten Bereich des Bildsensors gelegenen Einzelsensoren erfasst wurden.

Der Umfang des Rauschens ist insbesondere ein Wert, welcher einen Signal-Rausch-Abstand beschreibt. Der Bewertungsparameter ist ein Parameter, welcher erfindungsgemäß bereitgestellt wird. Der Bewertungsparameter kann durch eine nachfolgende Bildverarbeitung, durch welche insbesondere die Korrespondenzbildung an sich erfolgt, genutzt werden, um bestimmte Bildausschnitte eines Bildes bei der Korrespondenzbildung zu berücksichtigen, so dies durch den Bewertungsparameter indiziert ist, und bestimmte Bildausschnitte eines Bildes bei der Korrespondenzbildung nicht zu berücksichtigen, so dies durch den Bewertungsparameter indiziert ist.

Die erfindungsgemäße Vorrichtung ist dazu geeignet, dass erfindungsgemäße Verfahren auszuführen. Das erfindungsgemäße Verfahren stellt eine Methodik bereit, um den Einfluss eines unvermeidbaren Sensor-Rauschens im Rahmen eines Korrespondenz-Verfahrens kontrollierbar zu machen. Dabei ist das Verfahren einerseits sehr effizient, da beispielsweise wenig Rechen-, Speicher-, und Übertragungsaufwand besteht, und das Verfahren andererseits sehr dicht an eine vorhandene Signalverarbeitungskette angelehnt ist und somit besonders wirksam ist.

Erfindungsgemäß wird es insbesondere ermöglicht, solche Bereiche eines Bildes, in denen durch ein Rauschen des Bildsensors der Eindruck einer vorliegenden Oberflächenstruktur und/oder Textur entstehen kann, von solchen Bereichen zu unterscheiden in denen tatsächlich eine Oberflächenstruktur und/oder Textur vorliegt, die für eine Korrespondenzbildung geeignet ist.

Erfindungsgemäß wird ein Einfluss eines Rauschens im Rahmen der Korrespondenzbildung modelliert und das Risiko falscher Korrespondenzen aufgrund eines schlechten Signal-Rausch-Abstandes stark reduziert. Insbesondere wird pro Pixel eines Bildes eine binäre Information, also ein zusätzliches Bit, ermittelt, welches Auskunft darüber gibt, ob das Merkmal, das diesem Pixel zugeordnet ist (und z. B. die lokale Umgebung um das Pixel beschreibt) geeignet ist, um für die Korrespondenzbildung verwendet zu werden.

Dabei ist diese Eignung insbesondere von der lokalen Textur und vom Rauschen abhängig.

Erfindungsgemäß erfolgt ein Auswerten des Bildsignals, um zu bestimmen, in welchem Umfang für einen ausgewählten Bereich des Bildsensors ein durch den Bildsensor verursachtes Rauschen vorliegt. Dies bedeutet, dass ein durch den ausgewählten Bereich des Bildsensors verursachtes Rauschen in dem Bildsignal ermittelt wird. Der Umfang wird dabei insbesondere durch einen SNR-Wert beschrieben.

Erfindungsgemäß erfolgt ein Ermitteln eines resultierenden Bewertungsparameters für einen Bildausschnitt eines von dem Bildsensor erfassten Bildes, welcher beschreibt, ob der Bildausschnitt für eine Korrespondenzbildung geeignet ist, wobei der Bildausschnitt dem ausgewählten Bereich des Bildsensors entspricht und wobei der resultierende Bewertungsparameter basierend auf dem bestimmten Umfang des Rauschens ermittelt wird. Dies bedeutet, dass bevorzugt für jeden Bildabschnitt des von dem Bildsensor mittels des Bildsignals bereitgestellten Bildes ein resultierender Bewertungsparameter ermittelt und bereitgestellt wird.

Der resultierende Bewertungsparameter wir bevorzugt in Kombination mit einem zugehörigen Anteil des Bildsignals bereitgestellt, durch welchen ein Merkmal des durch den Bildsensor erfassten Bildes definiert ist, welcher dem Bildausschnitt zugehörig ist.

Bevorzugt umfasst das erfindungsgemäße Verfahren ferner ein Ausführen einer Korrespondenzbildung, wobei nur solche Bildbereiche für eine Korrespondenzbildung herangezogen werden, denen ein resultierender Bewertungsparameter zugeordnet ist, der beschreibt, dass der jeweilige Bildbereich für eine Korrespondenzbildung geeignet ist.

Es wird für den ausgewählten Bereich des Bildsensors jeweils ein anteiliger Umfang des Rauschens in unterschiedlichen Signalpfaden bestimmt, und der resultierende Bewertungsparameter für den Bildausschnitt wird basierend auf dem jeweiligen anteiligen Umfang des Rauschens aus allen Signalpfaden bestimmt. Der Umfang des Rauschens wird somit durch ein Ermitteln einzelner Anteile des Umfangs des Rauschens in unterschiedlichen Signalpfaden bestimmt. Es wird somit eine breitere und somit zuverlässigere Basis für ein zuverlässiges Ermitteln des resultierenden Bewertungsparameters geschaffen. Es wird insbesondere für jeden Signalpfad eine Bildsignalwert ermittelt, welcher den Umfang des durch den Bildsensor verursachten Rauschens beschreibt. Die Signalpfade sind bevorzugt zueinander parallele Signalpfade, wobei die Signalpfade an deren Ende zusammengeführt sind, um den resultierenden Bewertungsparameter zu ermitteln.

Weiter wird das Bildsignal in den unterschiedlichen Signalpfaden jeweils unterschiedlich gefiltert, um den jeweils anteiligen Umfang des Rauschens zu bestimmen. Es wird somit ermöglicht, nur bestimmte, für die Korrespondenzbildung besonders relevante Anteile des Bildsignals für die Bewertung des Bildausschnittes zu berücksichtigen.

Auch ist es vorteilhaft, wenn jedem anteiligen Umfang des Rauschens jeweils unterschiedlichen Frequenzbereichen des Bildsignals zugehörig sind. Jeder anteilige Umfang des Rauschens ist dabei einem Signalpfad zugehörig. So wird insbesondere ein Rauschen für unterschiedliche Frequenzbereiche des Bildsignals bestimmt, um den anteiligen Umfang des Rauschens in den Signalpfaden zu bestimmen. Es wird somit eine besonders gute Unterscheidung zwischen durch Rauschen verursachte Anteile des Bildsignals und solchen Anteilen des Bildsignals ermöglicht, welche durch das Abbilden einer tatsächlichen Oberfläche in dem Bild verursacht werden.

Ferner ist es vorteilhaft, wenn aus jedem anteiligen Umfang des Rauschens ein vorläufiger Bewertungsparameter ermittelt wird und die vorläufigen Bewertungsparameter zu dem resultierenden Bewertungsparameter zusammengefasst werden. Es wird somit für jeden Bildabschnitt aus mehreren vorläufigen Bewertungsparametern ein einzelner resultierender Bewertungsparameter generiert. So können insbesondere Informationen für unterschiedliche Frequenzbereiche des Bildsignals durch den einzelnen resultierenden Bewertungsparameter widergegeben werden. Dabei erfolgt insbesondere eine Wichtung der vorläufigen Bewertungsparameter. Somit kann aus mehreren Signalpfaden ein einziger resultierender Bewertungsparameter erzeugt werden, welcher in einfacher Weise für eine Korrespondenzbildung bereitgestellt werden kann.

Ebenso ist es vorteilhaft, wenn auf das Bildsignal eine Dynamikkompression angewendet wird, bevor das Auswerten des Bildsignals erfolgt. Eine Dynamikkompression wird auch als Tone-Mapping bezeichnet. Durch das Anwenden der Dynamikkompression kann ein Einfluss unterschiedlicher Grauwerte in dem Bildsignal auf den Umfang des Rauschens und somit auf den resultierenden Bewertungsparameter minimiert werden. Die Dynamikkompression wird dabei auf das gesamte von dem Bildsensor erfasste Bild angewendet.

Ferner ist es vorteilhaft, wenn der resultierende Bewertungsparameter ein binärer Wert ist, einen Grad einer Eignung zur Korrespondenzbildung in mehreren Stufen angibt oder ein vektorieller Wert ist. Solche Werte sind in einfacher Weise bereitzustellen und können in einfacher Weise weiterverarbeitet werden. Dabei ist es durch die beschränkte absolute Anzahl von möglichen Werten möglich, bei der Korrespondenzbildung festzulegen, wie ein entsprechender Bildausschnitt zu behandeln ist.

Auch ist es vorteilhaft, wenn das Auswerten des Bildsignals, um einen Umfang des Rauschens zu bestimmen, für mehrere ausgewählte Bereiche des Bildsensors erfolgt, um mehrere resultierende Bewertungsparameter zu ermitteln. Durch solch eine Vielzahl von resultierenden Bewertungsparametern können unterschiedliche Merkmale in einem Bild und deren Eignung zur Korrespondenzbildung beschrieben werden. Bevorzugt wird dabei für jeden Bildpunkt des von dem Bildsensor erfassten Bildes basierend auf dem dort vorliegenden Umfang des Rauschens ein Bewertungsparameter ermittelt.

Ferner ist es vorteilhaft, wenn auf einen der resultierenden Bewertungsparameter, welcher einem ersten Bildausschnitt zugehörig ist, eine Stabilisierungsfunktion angewendet wird, wobei eine örtliche und/oder zeitliche Filterung anhand benachbarter resultierender Bewertungsparameter erfolgt. Somit wird auf einen der resultierenden Bewertungsparameter, welcher einem ersten Bildausschnitt zugehörig ist, eine Stabilisierungsfunktion angewendet, wobei eine Anpassung eines Wertes des resultierenden Bewertungsparameters des ersten Bildausschnitts an einen resultierenden Bewertungsparameter eines dem ersten Bildbereich benachbarten Bildausschnitts erfolgt. So kann die einem resultierenden Bewertungsparameter zugrundeliegende Informationsbasis erweitert werden und somit dessen Zuverlässigkeit erhöht werden. So wird beispielsweise ausgenutzt, dass in einem Bild typischerweise solche Bereiche nebeneinander angeordnet sind, welche zur Korrespondenzbildung geeignet sind, und ebenso solche Bereiche nebeneinander angeordnet sind, welche weniger zur Korrespondenzbildung geeignet sind.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1     ein beispielhaftes Bild, welches von einem Bildsensor erfasst wurde,

Figur 2     eine Blockdarstellung einer Signalverarbeitung gemäß einer ersten Ausführungsform der Erfindung,

Figur 3     eine Blockdarstellung einer Signalverarbeitung gemäß einer zweiten Ausführungsform der Erfindung,

Figur 4     eine erste Logikschaltung zum Zusammenfassen mehrerer vorläufiger Bewertungsparameter zu einem resultierenden Bewertungsparameter,

Figur 5    eine zweite Logikschaltung zum Zusammenfassen mehrerer vorläufiger Bewertungsparameter zu einem resultierenden Bewertungsparameter,

Figur 6    eine dritte Logikschaltung zum Zusammenfassen mehrerer vorläufiger Bewertungsparameter zu einem resultierenden Bewertungsparameter, und

Figur 7    eine schematische Darstellung einer Stabilisierungsfunktion.

Ausführungsformen der Erfindung

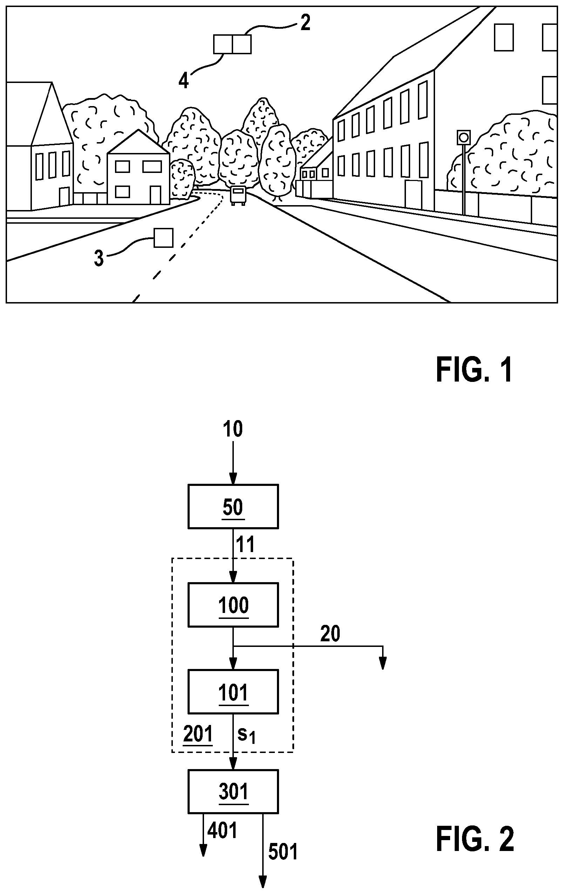

Figur 1 zeigt ein beispielhaftes Bild 1, welches von einem Bildsensor erfasst wurde. Dabei entspricht jeder Bildpunkt des Bildes einem Einzelsensor einer Sensormatrix des Bildsensors. Es ist ersichtlich, dass in einem oberen Bereich des beispielhaften Bildes 1 der Himmel abgebildet ist und in einem unteren Bereich des beispielhaften Bildes 1 eine Asphaltdecke einer Straße abgebildet ist.

In Figur 1 sind zwei beispielhafte Bildausschnitte 2, 3 des Bildes 1 markiert. Der Bildsensor erfasst mit seiner aktiven Oberfläche das Bild 1. Somit ist jedem Bereich des Bildsensors auch ein korrespondierender Bildausschnitt 2, 3 des von dem Bildsensor erfassten Bildes 1 zugehörig. Die Bildausschnitte 2, 3 markieren somit ebenso zwei ausgewählte Bereiche des Bildsensors. Dabei entspricht ein erster Bildausschnitt 2 einem ersten ausgewählten Bereich des Bildsensors und ein zweiter Bildausschnitt 3 einem zweiten ausgewählten Bereiche des Bildsensors.

Der erste Bildausschnitt 2 bildet den Himmel ab und stellt somit im Wesentlichen eine blaue Fläche dar. Der zweite Bildausschnitt 3 bildet die Asphaltdecke der Straße ab und stellt somit im Wesentlichen eine graue Fläche dar. Zudem ist in beiden Bildausschnitten 2, 3 eine Texturierung vorhanden, wobei sich die Texturierung für den ersten Bildausschnitt 2 hauptsächlich aus einem Rauschen des Bildsensors ergibt, da im abgebildeten Himmel keine tatsächlichen Texturen vorhanden sind. Für den zweiten Bildausschnitt 3 ergibt sich die Texturierung aus der rauen Oberfläche der Asphaltdecke und zusätzlich aus dem Rauschen des Bildsensors. Dabei kann insbesondere eine geringfügige Bewegung des Bildsensors in Kombination mit der rauen Oberfläche der Asphaltdecke dazu führen, dass im Bereich des zweiten Bildausschnitts 3 auch ohne ein Rauschen des Bildsensors ein rauschähnliches Signal auftritt.

Es ergibt sich, dass der erste Bildausschnitt 2 nicht für eine Korrespondenzbildung geeignet ist, da die in dem ersten Bildausschnitt 2 auftretenden Texturen lediglich durch statistische Zufallsprozesse begründet sind. Der zweite Bildausschnitt 3 ist hingegen für eine Korrespondenzbildung geeignet, da die in dem zweiten Bildausschnitt 3 auftretenden Texturen tatsächliche Referenzpunkte in der von dem Bildsensor abgebildeten Umgebung darstellen.

Es sei darauf hingewiesen, dass die Bildausschnitte 2, 3 eine beliebige Größe und somit eine beliebige Anzahl von Bildpunkten des Bildsensors umfassen können. Im Folgenden wird beispielhaft angenommen, dass der ausgewählte Bereich des Bildsensors lediglich ein einzelnes Pixel des Bildsensors umfasst und der zugehörige Bildbereich 2, 3 somit einen einzelnen Bildpunkt umfasst.

Das Rauschen des Bildsensors kann als Zufallsprozess betrachtet werden, dessen Parameter statistisch beschrieben sind.

Das Rauschen eines einzelnen Pixels oder Bildpunktes eines Bildsensors kann im Normalfall als unabhängig vom Rauschen der Nachbarpixel betrachtet werden. Außerdem kann angenommen werden, dass alle Pixel (wegen gleichem Fertigungsprozess und gleicher Temperatur) etwa gleiche statistische Eigenschaften aufweisen. Im typischen Arbeitsbereich des Bildsensors gehorcht das Rauschen näherungsweise einer Normalverteilung. Die Varianz des Rauschens kann dabei mit

$$\sigma_g^2(g) = \sigma_0^2 + \alpha\,g$$

näherungsweise beschrieben werden. Die Varianz des Rauschens wächst demnach mit einem Grauwert g, und zwar linear mit der Steigung a. Bei Dunkelheit (Grauwert g = 0) beträgt die Varianz des Rauschens $\sigma_0^2$.

Für die weitere Verarbeitung des Bildsignals 10 kann es von Vorteil sein, die Abhängigkeit des Rauschens vom Grauwert g zu beseitigen.

Zu diesem Zweck werden die originalen Grauwerte g auf Ersatz-Grauwerte h(g) abgebildet, gemäß der folgenden Funktion:

$$h(g) = \frac{2\,\sigma_C}{\sqrt{\alpha}}\,\sqrt{\sigma_0^2 + \alpha\,g} + C$$

Die Funktion h(g) wird nachfolgend als Tone-Mapping-Funktion bezeichnet. Der Ausdruck Tone-Mapping ist gleichbedeutend zu dem Ausdruck Dynamikkompression.

Das Tone-Mapping wird als pixelweise Operation durchgeführt (also Pixel für Pixel, unabhängig voneinander). Nach dem Tone-Mapping ist die GrauwertAbhängigkeit des Rauschens beseitigt. Die Varianz des Rauschens ist dann konstant und beträgt $\sigma_C^2$.

Die beiden bei der Korrespondenzbildung betrachten Bilder weisen (auch nach dem Tone-Mapping) i. allg. eine unterschiedliche Varianz des Rauschens auf.

Die Tone-Mapping-Funktion ist zumeist komplexer als zuvor beschrieben, insbesondere wenn es sich um einen nichtlinearen Bildsensor (z. B. HDR-Sensor, High Dynamic Range) handelt. Die Tone-Mapping-Funktion kann zeitlich veränderlich sein, z. B. sich mit jedem aufgenommenen Bild in Abhängigkeit der Kameraparameter ändern. Die Tone-Mapping-Funktion kann in einer Lookup-Tabelle oder als Rechenvorschrift abgelegt sein.

Es wird nachfolgend angenommen, dass jeder Bildpunkt durch additives Gaußsches (d. h. normal-verteiltes) Rauschen gestört ist und dass die Störungen der Bildpunkte statistisch unabhängig voneinander und identisch verteilt sind. Die Standardabweichung dieses Eingangs-Rauschprozesses wird mit $\sigma_C$ bezeichnet. Vereinfachend soll angenommen werden, dass ein Tone-Mapping bereits stattgefunden hat, so dass $\sigma_C$ im jeweiligen Bild konstant und unabhängig vom Grauwert g ist.

Diese Vereinfachung ist nicht zwingend nötig: Es ist ebenso möglich, eine Grauwertabhängigkeit des Rauschens pro Pixel zu modellieren und zu berücksichtigen, jedoch bringt dies den Nachteil einer höheren Komplexität mit sich, da die Information über die Varianz des am jeweiligen Pixel vorhandenen Rauschens innerhalb der Signalverarbeitungskette weitergegeben werden muss, wenn optimale Entscheidungsschwellen genutzt werden sollen (die dann vom Grauwert g des betrachteten Pixels und von den Grauwerten der Umgebung abhängig sind).

Weiterhin wird angenommen, dass eine Bildsignalverarbeitungskette zumindest teilweise aus linearen Filtern besteht: Beispielsweise aus einem Glättungsfilter, gefolgt von einer Aufspaltung in mehrere Signalpfade, wobei in jedem Signalpfad weitere Filter folgen können, beispielsweise Glättungsfilter, Ableitungsfilter, Waveletfilter und Kombinationen davon.

Figur 2, zeigt dazu einen beispielhaften Ausschnitt aus einer Signalverarbeitungskette für ein erstes Bild des Bildsensors. Die Signalverarbeitungskette kann mehrfach aufgebaut sein, beispielsweise zweimal - für ein erstes Bild und ein Vergleichsbild. Figur 2 zeigt dabei eine Blockdarstellung eines Ausschnitts einer Signalverarbeitung gemäß einer Ausführungsform der Erfindung.

Dabei wird von dem Bildsensor ein Bildsignal 10 bereitgestellt, welches ein Eingangssignal eines ersten Blocks 50 bildet. Der erste Block bildet daher eine Eingangsstufe, welche dazu eingerichtet ist, das Bildsignal 10 von dem Bildsensor zu empfangen.

Der erste Block 50 stellt z. B. ein optionales Tone-Mapping dar, das für ein vom Grauwert g unabhängiges Rauschen mit Standardabweichung $\sigma_C$ sorgt. Von dem ersten Block 50 wird ein angepasstes Bildsignal 11, also das Bildsignal 10 nachdem das Tone-Mapping auf das Bildsignal 10 angewendet wurde, an einen zweiten Block 100 weitergeleitet.

Der zweite Block 100 stellt z. B. ein lineares Glättungsfilter dar. Durch den Glättungsfilter wird das angepasste Bildsignal geglättet und damit ein geglättetes Bildsignal 20 erzeugt. Nach dem zweiten Block 100 spaltet sich der Signalpfad auf und das geglättete Bildsignal 20 wird in mehreren parallelen Signalpfaden weiterverarbeitet.

Ein erster Signalpfad ist in Figur 2 dargestellt. Dieser umfasst neben dem ersten Block 50 und dem zweiten Block 100 noch einen dritten Block 101 und einen vierten Block 301. Der dritte Block 101 ist z.B. ein weiteres lineares Filter, beispielsweise ein Ableitungsfilter, das zwei Pixelwerte aus einer gemeinsamen Umgebung des Bildes 1 voneinander subtrahiert.

Es ist bekannt, dass eine Hintereinanderschaltung von linearen Filtern, beispielsweise der durch den zweiten Block 100 und den dritten Block 101 dargestellten Filter, als ein einziges lineares Filter betrachtet werden kann, welcher nachfolgend auch als Ersatzfilter 201 bezeichnet wird. Für jeden Signalpfad kann also ein Ersatzfilter 201 angegeben werden, wobei i. allg. so viele unterschiedliche Ersatzfilter 201 zu betrachten sind wie es Signalpfade gibt. Ein solches Ersatzfilter 201 bewirkt eine gewünschte gewichtete, lineare Verknüpfung von mehreren Pixelwerten (Grauwerten), wobei die Filterkoeffizienten die Gewichte darstellen. Gleichzeitig bewirkt es eine gewichtete Addition der unabhängigen Rauschprozesse. Diese soll an einem sehr einfachen Beispiel hergeleitet werden:

Betrachtet man beispielsweise die gewichtete Addition $Y = w_1 X_1 + w_2 X_2$ der beiden unkorrelierten und identisch verteilten, mittelwertfreien Zufallsvariablen $X_1$ und $X_2$ mit Gewichten $w_1$ bzw. $w_2$, so ergibt sich für die Zufallsvariable Y der gewichteten Summe:

$$\sigma_Y^2 = \mathrm{E}\left\{Y^2\right\} = \mathrm{E}\left\{(w_1 X_1 + w_2 X_2)^2\right\}$$
$$= w_1^2 \mathrm{E}\left\{X_1^2\right\} + 2w_1 w_2 \mathrm{E}\left\{X_1 X_2\right\} + w^2 \mathrm{E}\left\{X_2^2\right\}$$
$$= w_1^2 \sigma_{X_1}^2 + 0 + w_2^2 \sigma_{X_2}^2.$$

Dabei steht E {} für einen Erwartungswert. Wegen der Unkorreliertheit verschwindet der mittlere Term. Verallgemeinert gilt entsprechend für ein lineares Filter $Y = \sum_i w_i X_i$ mit Filterkoeffizienten $w_i$ und $\sigma_{Xi} = \sigma_C$ für die Varianzen vor und nach der Filterung die Beziehung

$$\sigma_Y^2 = \sigma_C^2 \sum_i w_i^2,$$

und entsprechend für die Standardabweichungen

$$\sigma_Y = \sigma_C \sqrt{\sum_i w_i^2}.$$

Der Faktor

$$\sigma_Y / \sigma_C = \sqrt{\sum_i w_i^2}$$

ist also ein Verstärkungsfaktor für das Rauschen. Der Begriff Verstärkung ist hier verallgemeinert aufzufassen, denn die Verstärkung kann auch Werte $\leq 1$ aufweisen. Bei Bevorzugung ganzzahliger Koeffizienten $w_i$ ist die Verstärkung jedoch meistens > 1.

Voraussetzung für das Zustandekommen dieser einfachen Beziehung ist also die Unkorreliertheit der Rauschprozesse. Diese Annahme kann für Bildsensoren in der Praxis mit sehr guter Näherung getroffen werden. Voraussetzung ist hierbei, dass zwischen dem Ausgang des Bildsensors bzw. des Tone-Mappings und dem Ersatzfilter 201 keine weitere relevante Filterung stattfindet, die die getroffene Annahme der Unkorreliertheit verletzen würde.

Falls aber (zwischen Bildsensor bzw. Tone-Mapping und Ersatzfilter 201) weitere die Unkorreliertheit verletzende Filter vorhanden sind, so besteht eine einfache praktikable Lösung darin, diese als lineare Filter zu modellieren und in das Ersatzfilter 201 mit einzubeziehen. Somit sind alle weiteren Betrachtungen wenigstens näherungsweise gültig.

In dem vierten Block 301 findet eine Verdichtung der Information des ersten Signalpfades statt. Dabei werden i. allg. nichtlineare Operationen durchgeführt.

So wird beispielsweise als ein Ausgangssignal 401 eine grob quantisierte (also mit wenig Bits darstellbare) Repräsentation des Eingangssignals des vierten Blocks 301 erzeugt. Das Ausgangssignal 401 kann einen Teil eines Merkmals aus dem Bild 1 darstellen oder weiterverarbeitet werden, um in die Bildung eines Merkmals einbezogen zu werden. Das Ausgangssignal 401 und die weitere Merkmalsbildung werden hier nicht weiter betrachtet. Die Merkmalsbildung erfolgt im Rahmen der an die Signalverarbeitung anschließenden Korrespondenzbildung.

Weiterhin findet in dem vierten Block 301 eine Bewertung des an diesem Block vorliegenden Eingangssignals $s_1$ hinsichtlich des Rauschens statt, die nachfolgend Einzelbewertung genannt wird und durch welche ein vorläufiger Bewertungsparameter 501 bereitgestellt wird. Dabei erfolgt ein Auswerten des Bildsignals 10, um zu bestimmen, in welchem Umfang für einen ausgewählten Bereich des Bildsensors ein durch den Bildsensor verursachtes Rauschen vorliegt. Dabei wird das durch den Ersatzfilter 201 vorgefilterte Bildsignal 10 ausgewertet. Wie auch ein im Folgenden noch beschriebener resultierender Bewertungsparameter 601 beschreibt auch der vorläufige Bewertungsparameter 501, ob der jeweilige Bildausschnitt 2,3 für eine Korrespondenzbildung geeignet ist, wobei der Bildausschnitt 2, 3 dem ausgewählten Bereich des Bildsensors entspricht und wobei der Bewertungsparameter basierend auf dem bestimmten Umfang des Rauschens ermittelt wird. Dabei liegt dem vorläufigen Bewertungsparameter 501 jedoch nur das in dem dritten Block 101 vorab gefilterte Bildsignal 10 zugrunde. So wird durch den vorläufigen Bewertungsparameter 501 beispielsweise nur eine Aussage über eine Eignung eines Bildausschnittes 2, 3 für eine Korrespondenzbildung für einen bestimmten Frequenzbereich des Bildsignals 10 bereitgestellt.

Das Ermitteln des vorläufigen Bewertungsparameters 501 kann im einfachsten Falle aus einer Fallunterscheidung bestehen, wobei geprüft wird, ob der Betrag $|s_1|$ des Eingangssignals $s_1$ für den vierten Block 301 eine Schwelle

$\varepsilon_{1A}$ unterschreitet, wobei der Index 1 hier jeweils für den in Figur 2 dargestellten ersten Signalpfad steht. Im Falle der Unterschreitung wird am Ausgang des vierten Blocks 301 eine 0 ausgegeben, sonst eine 1 als vorläufiger Bewertungsparameters 501 ausgegeben. Diese Ausführungsform mit binärwertigem vorläufigen Bewertungsparameter 501 stellt eine bevorzugte Ausführungsform dar.

Der beschriebene symmetrische Schwellwert-Vergleich mit Betrachtung eines Absolutwertes stellt eine bevorzugte Ausführungsform dar, die insbesondere dann sinnvoll ist, wenn die Summe der Filter-Gewichte 0 ergibt, also $0 = \sum_i w_i$. Ebenso vorteilhaft und besonders sinnvoll bei $0 \neq \sum_i w_i$ ist der unsymmetrische Schwellwert-Vergleich, bei dem geprüft wird, ob das Eingangssignal $s_1$ innerhalb oder außerhalb eines Intervalls zwischen z. B. $\varepsilon_{1AL}$ und $\varepsilon_{1AR}$ liegt (mit $\varepsilon_{1AL} < \varepsilon_{1AR}$).

Der Einfachheit halber beziehen sich die nachfolgenden Beispiele aber auf den symmetrischen Schwellwert-Vergleich.

In alternativen Ausführungsformen erfolgt ein entsprechender Vergleich des Betrags $|s_1|$ des Eingangssignals $s_1$ mit drei Schwellen $\varepsilon_{1A} < \varepsilon_{1B} < \varepsilon_{1C}$, so dass vier mögliche Zustände existieren und am Ausgang des vierten Blocks 301 eine Einzelbewertung mit zwei Bit Wortbreite als vorläufiger Bewertungsparameter 501 ausgegeben wird.

Es ist von Vorteil, die jeweilige Schwelle (z. B. $\varepsilon_{1A}$) in Abhängigkeit von folgenden Einflussgrößen zu wählen: Rausch-Eigenschaften des Bildsensors, ggf. ersatzweise Rausch-Eigenschaften des Bildsignals nach einem Tone-Mapping, Rausch-Verstärkung durch das Ersatzfilter 201, oder anwendungsspezifischer Parameter, z. B. einem Faktor $a_A$. Weiterhin ist es von Vorteil, die Einflussgrößen multiplikativ miteinander zu verknüpfen, um somit die Schwelle festzulegen.

Nachfolgend wird für das Ausführungsbeispiel also angenommen, dass die Schwelle $\varepsilon_{1A}$ folgendermaßen bestimmt wird:

$$\varepsilon_{1A} = a_A \cdot \sigma_C \cdot \sqrt{\sum_i w_{1,i}^2}.$$

Die entsprechende Beziehung gilt auch für weitere Signalpfade p (in diesem Ausführungsbeispiel p = 1 ... 99, wobei der konkrete Wert 99 hier unbedeutend ist und lediglich beispielhaft gewählt wurde):

$$\varepsilon_{pA} = a_A \cdot \sigma_C \cdot \sqrt{\sum_i w_{p,i}^2}.$$

Der Index A steht hier für eine erste Schwelle $\varepsilon_{pA}$, die mit einem ersten anwendungsspezifischen Faktor $a_A$ festgelegt werden kann. Entsprechende Beziehungen existieren optional für weitere Schwellen, z. B. Index B für Schwelle $\varepsilon_{pB}$ und Faktor $a_B$, und so weiter.

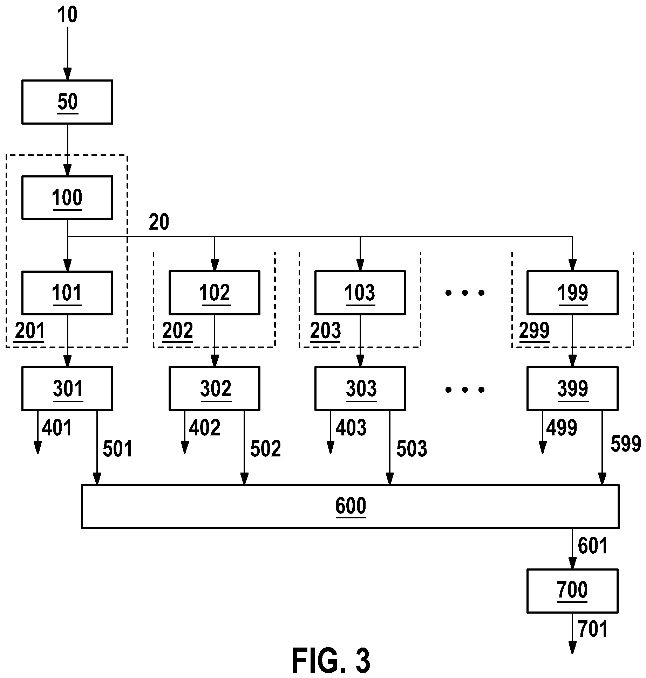

Figur 3 zeigt einen größeren Ausschnitt aus der in Figur 2 abgebildeten Signalverarbeitungskette. Hier sind neben dem in Figur 2 beschriebenen Signalpfad, welcher auch als erster Signalpfad bezeichnet wird, die weiteren Signalpfade dargestellt. In jedem der Signalpfade wird für den ausgewählten Bereich des Bildsensors ein anteiliger Umfang des Rauschens bestimmt. Der anteilige Umfang des Rauschens kann dabei dem Umfang des für den ausgewählten Bereich des Bildsensors durch den Bildsensor verursachten Rauschens entsprechen. Der anteilige Umfang des Rauschens kann aber auch auf bestimmte Eigenschaften des Bildsignals 10, insbesondere einen Frequenzbereich, beschränkt sein.

Es ist eine Anzahl von p Signalpfaden dargestellt. Ein p-ter Signalpfad mit $p \in \{1, ..., 99\}$ beinhaltet dabei ein lineares Filter 102, 103, ... , 199 (hier also mit der Referenzzeichen 100+p bezeichnet), welches dem dritten Block 101 entspricht. Dabei weisen die linearen Filter 102, 103, ... , 199 unterschiedliche Filtereigenschaften auf, um den den Signalpfaden zugehörigen anteiligen Umfang des Rauschens zu bestimmen. Eine Zusammenfassung des jeweiligen linearen Filters 102, 103, ... , 199 eines Signalpfades mit dem vorgeschalteten linearen Filter des zweiten Blocks 100 werden als die dem jeweiligen Signalpfad zugehörigen Ersatzfilter 201, 202, ... , 299 bezeichnet (Referenzzeichen 200+p). Vorteilhafterweise sind die linearen Filter 101, 102, ..., 199 alle unterschiedlich zueinander. Entsprechend sind auch die Ersatzfilter 201, 202, ..., 299 unterschiedlich. So sind insbesondere durch eine entsprechende Auswahl der linearen Filter 101, 102, ..., 199 die mehreren zugehörigen Anteile des Umfangs des Rauschens jeweils unterschiedlichen Frequenzbereichen des Bildsignals 10 zugehörig.

Ein p-ter Signalpfad mit $p \in \{1 ... 99\}$ beinhaltet dabei ferner jeweils einen Block 301, 302, 303, ... 399, welcher dem vierten Block 301 des ersten Signalpfads entspricht. Die Ersatzfilter 201, 202, ..., 299 ergeben zusammen mit den Blöcken 301, 302, 303, ... 399 und einem optionalen Kombinationsblocks 600 eine Auswertungsstufe. Diese ist dazu eingerichtet, das Bildsignal 10 auszuwerten, um zu bestimmen, in welchem Umfang für einen ausgewählten Bereich des Bildsensors ein durch den Bildsensor verursachtes Rauschen vorliegt, und einen resultierenden Bewertungsparameter 601 für den Bildausschnitt 2, 3 des von dem Bildsensor erfassten Bildes zu ermitteln, welcher beschreibt, ob der Bildausschnitt 2, 3 für eine Korrespondenzbildung geeignet ist, wobei der Bildausschnitt 2, 3 dem ausgewählten Bereich des Bildsensors entspricht und wobei der resultierende Bewertungsparameter 601 basierend auf dem bestimmten Umfang des Rauschens ermittelt wird.

An den Eingängen der Blöcke 301, 302, 303, ..., 399 liegen die Signale $s_p$ mit $p \in \{1, ..., 99\}$ an. Wie zuvor beschrieben, findet in diesen Blöcken 301, 302, 303, ..., 399 wie auch in dem vierten Block 301 jeweils eine Einzelbewertung eines Eingangssignals statt, wobei jeweils ein Durchführen von einem oder mehreren Schwellwert-Vergleichen für den Betrag $|s_p|$ des jeweiligen Eingangssignals $s_p$ erfolgt.

Die Ergebnisse dieser Vergleiche werden als vorläufige Bewertungsparameter 501, 502, 503, ... 599 bereitgestellt und an einen optionalen Kombinationsblock 600 weitergegeben.

Aufgabe des Kombinationsblocks 600 ist eine Informationsverdichtung. Diese ist dadurch gekennzeichnet, dass ein Ausgangssignal des Kombinationsblocks 600 mit weniger Bits beschrieben werden kann als die Gesamtheit der Eingangssignale, also der vorläufigen Bewertungsparameter 501, 502, 503, ..., 599. Das Ausgangssignal hat dann i. allg. eine geringere Entropie. Es tritt ein Informationsverlust auf, der aber bewusst in Kauf genommen wird, z. B. um den Vorteil einer geringen Wortbreite zu erreichen und Übertragungsbandbreite einzusparen. Das Ausgangssignal des Kombinationsblocks 600 ist der resultierende Bewertungsparameter 601. Es werden somit durch den Kombinationsblock 600 die vorläufigen Bewertungsparameter 501, 502, 503, ..., 599 zu dem resultierenden Bewertungsparameter 601 zusammengefasst.

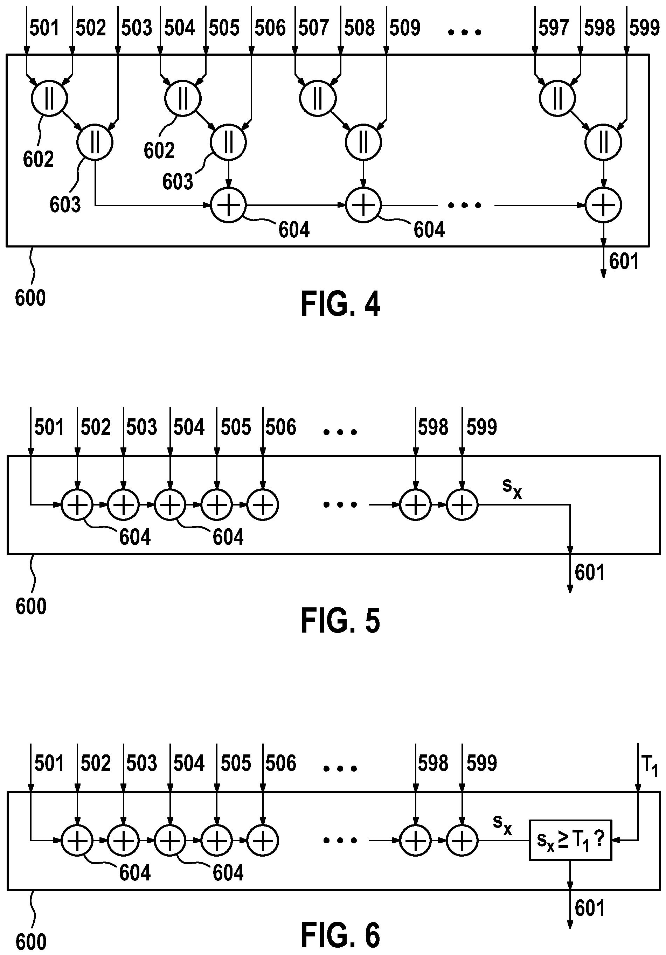

Die Figuren 4, 5 und 6 zeigen alternative Ausführungsbeispiele, wie der Kombinationsblock 600 aufgebaut sein kann.

Figur 4 zeigt eine erste Logikschaltung zum Zusammenfassen mehrerer vorläufiger Bewertungsparameter 501, 502, 503, ..., 599 zu einem resultierenden Bewertungsparameter 601, welche in einer vorteilhaften Ausführungsform der Erfindung der Kombinationsblock 600 ist. Dabei sind die vorläufigen Bewertungsparameter 501, 502, 503, ..., 599 als binärwertige Eingangssignale angenommen. Jeweils drei der vorläufigen Bewertungsparameter 501, 502, 503, ..., 599 bilden eine Gruppe und sind mittels zweier ODER-Gatter 602, 603 logisch verknüpft. Das bedeutet, dass an einer Ausgangsseite der ODER-Gatter 602, 603 eine logische "1" als Zwischenergebnis für die jeweilige Gruppe ausgegeben wird, wenn zumindest einer der vorläufigen Bewertungsparameter 501, 502, 503, ..., 599 dieser Gruppe eine logische "1" als Wert angenommen hat. Die binären Zwischenergebnisse aller Gruppen sind über eine Vielzahl von Addierern 604 gekoppelt und werden somit addiert. Bei 99 Signalpfaden und 33 Dreiergruppen hat das Ausgangssignal des Kombinationsblocks 600 also einen Wertebereich von 0 - 33. Dies entspricht einer Entropie von weniger als 6 Bit, während für die vorläufigen Bewertungsparameter 501, 502, 503, ..., 599 insgesamt 99 Bit zu übertragen sind. Es wird somit eine erste Informationsverdichtung auf diesem Wege erreicht. Die addierten Zwischenergebnisse werden als Summensignal $s_x$ bezeichnet und an einem Ausgang des Kombinationsblocks 600 als resultierender Bewertungsparameter 601 bereitgestellt. Der resultierende Bewertungsparameter 601 weist somit einen Wertebereich auf, welcher durch die einzelnen Werte in mehreren Stufen einen Grad beschreibt, der eine Eignung des jeweils betrachteten Bildausschnitts 2, 3 zur Korrespondenzbildung beschreibt.

Figur 5 zeigt eine zweite Logikschaltung zum Zusammenfassen mehrerer vorläufiger Bewertungsparameter 501, 502, 503, ..., 599 zu einem resultierenden Bewertungsparameter 601, welche in einer vorteilhaften Ausführungsform der Erfindung der Kombinationsblock 600 ist. Fig. 5 zeigt eine gegenüber der in Figur 4 gezeigten Logikschaltung vereinfachte Möglichkeit zur Informationsverdichtung, nämlich durch einfache Addition der vorläufigen Bewertungsparameter 501, 502, 503, ..., 599, die nicht binärwertig sein müssen, sondern auch größere Wertebereiche abdecken können. Dazu sind alle Eingänge des Kombinationsblocks 600, an denen die vorläufigen Bewertungsparameter 501, 502, 503, ..., 599 dem Kombinationsblock 600 bereitgestellt werden, über eine Vielzahl von Addierern 604 gekoppelt, so dass alle der vorläufigen Bewertungsparameter 501, 502, 503, ..., 599 aufaddiert werden.

Die addierten vorläufigen Bewertungsparameter 501, 502, 503, ..., 599 werden als Summensignal $s_x$ bezeichnet und an einem Ausgang des Kombinationsblocks 600 als resultierender Bewertungsparameter 601 bereitgestellt.

Figur 6 zeigt eine dritte Logikschaltung zum Zusammenfassen mehrerer vorläufiger Bewertungsparameter 501, 502, 503, ..., 599 zu einem resultierenden Bewertungsparameter 601, welche in einer vorteilhaften Ausführungsform der Erfindung der Kombinationsblock 600 ist. Der in Figur 6 gezeigte Kombinationsblock 600 ist ähnlich aufgebaut wie der aus Fig. 5 bekannte Kombinationsblock 600, jedoch wird das Summensignal $s_x$ vor dem Bereitstellen an dem Ausgang des Kombinationsblocks mit einem Schwellwert $T_1$ verglichen und das Ergebnis dieses Vergleichs als binäre Information ausgegeben. Der resultierende Bewertungsparameter 601 ist somit ein binärer Wert.

Wie in Figur 3 gezeigt, wird somit durch jeden der p Signalpfade ein vorläufiger Bewertungsparameter 501, 502, 503, ..., 599 ermittelt, wobei jeder der vorläufigen Bewertungsparameter 501, 502, 503, ..., 599 auf einem anteiligen Umfang des Rauschens basiert, wobei der anteilige Umfang des Rauschens von dem in dem jeweiligen Signalpfad angewandten Ersatzfilter 201, 202, 203, ..., 299 abhängig ist. Durch den Kombinationsblock 600 werden die vorläufigen Bewertungsparameter 501, 502, 503, ..., 599 zu dem resultierenden Bewertungsparameter 601 zusammengefasst. Da jeder der vorläufigen Bewertungsparameter 501, 502, 503, ..., 599 auf einem anderen anteiligen Umfang des Rauschens basiert, wird somit der resultierende Bewertungsparameter 601 für den betrachteten Bildausschnitt 2, 3 basierend auf einem Rauschen bestimmt, welches sich aus einer Kombination einzelner Anteile des Rauschens, hier den anteiligen Umfängen des Rauschens, ergibt.

Es besteht eine Vielzahl weiterer Möglichkeiten zur Ausgestaltung des Kombinationsblocks 600, um die vorläufigen Bewertungsparameter 501, 502, 503, ..., 599 geeignet miteinander zu kombinieren, beispielsweise mit logischen Operationen (AND, OR, XOR, NOT usw.), Rechenoperationen (Addition, Multiplikation usw.), Schwellwertvergleiche, Quantisierung, Lookup-Tabellen, und so weiter. Die Verknüpfung dieser Operationen kann entweder "designt" oder anhand von Trainingsdaten "trainiert" werden.

Entscheidend ist hierbei, dass die Einzelbewertungen und somit die vorläufigen Bewertungsparameter 501, 502, 503, ..., 599 zu einer verdichteten Bewertung verknüpft werden, so dass die verdichtete Bewertung bereits eine relativ verlässliche Information darüber gibt, ob und ggf. wie weit sich das gerade prozessierte Signal, welches als Ausgangssignal 401, 402, 403, ..., 499 bereitgestellt wird, vom Rauschen abhebt. Diese verdichtete Bewertung kann dabei binärwertig sein oder einen größeren Wertebereich aufweisen.

Diese verdichtete Bewertung kann auch vektorwertig sein. In diesem Falle wird also nicht nur eine binärwertige oder "mehrwertige" Information ausgegeben, sondern mehrere solche, die zusammen betrachtet als Vektor aufgefasst werden können. Beispielsweise können die in Figur 4 und Figur 5 vorgeschlagenen Beispiele zur Zusammenfassung von Einzelbewertungen nicht als Alternativen betrachtet werden, sondern können beide gemeinsam in dem Kombinationsblock 600 implementiert sein, so dass das Ergebnis des Kombinationsblocks 600 und somit der resultierende Bewertungsparameter 601 ein zweidimensionaler Vektor ist.

Auf das Ausgangssignal des Kombinationsblocks 600 und somit auf den resultierenden Bewertungsparameter 601 wird eine Stabilisierungsfunktion angewendet. Dies ist in Figur 3 durch einen Stabilisierungsblock 700 dargestellt.

Der optionale Stabilisierungsblock 700 nutzt räumliche und/oder zeitliche statistische Abhängigkeiten aus, um das Ergebnis zu stabilisieren. Beispielsweise, indem die Zwischenergebnisse des in Figur 5 dargestellten Kombinationsblock 600, die einen Wertebereich 0 - 99 aufweisen, in einer räumlich-zeitlichen Pixel-Nachbarschaft gewichtet aufsummiert und mit einer Schwelle verglichen werden.

Dies ist dadurch motiviert, dass eine örtlich und/oder zeitlich stabilere Entscheidung getroffen kann, wenn die Entscheidungen nicht einzeln (pixelweise) getroffen werden, sondern in einem örtlichen und/oder zeitlichen Kontext.

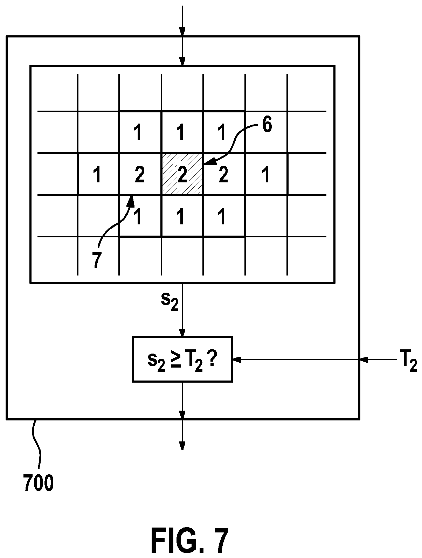

Ein Beispiel für die gewichtete Summation in einer räumlichen Pixel-Nachbarschaft ist in Figur 7 dargestellt.

Dabei erfolgt das Auswerten des Bildsignals 10, um einen Umfang eines Rauschens zu bestimmen, für mehrere ausgewählte Bildausschnitte 2, 3 des Bildsensors, um mehrere resultierende Bewertungsparameter 601 zu ermitteln. So wird insbesondere für jedes Pixel, also für jeden Bildpunkt, oder für jedes Merkmal in dem Bild die in Figur 3 dargestellte Signalverarbeitung ausgeführt. Wird die Signalverarbeitung für jedes Pixel des Bildsensors ausgeführt, so ergibt sich, dass für jedes Pixel ein resultierender Bewertungsparameter 601 ermittelt wird.

In dem durch den Stabilisierungsblock 700 dargestellten Anteil der Signalverarbeitung wird auf den resultierenden Bewertungsparameter 601, welcher beispielsweise dem ersten Bildausschnitt 2 zugehörig ist, eine Stabilisierungsfunktion angewendet, wobei eine Anpassung eines Wertes des resultierenden Bewertungsparameter 601 des ersten Bildausschnitts 2 an einen resultierenden Bewertungsparameter eines dem ersten Bildausschnitt 2 benachbarten Bildausschnitts 4 erfolgt.

Dazu werden alle ermittelten resultierenden Bewertungsparameter 601 zumindest für eine kurze Zeit zwischengespeichert, so dass für jedes Pixel und somit für jeden Bildausschnitt 2, 3 auf die jeweiligen resultierenden Bewertungsparameter der benachbarten Pixel zugegriffen werden kann.

Beispielsweise wird hierfür den in Figur 7 schraffiert dargestellten Referenzpixel 6 auf die resultierenden Bewertungsparameter 601 von zehn Nachbarpixeln zugegriffen und über die insgesamt elf Pixel eine gewichtete Summation der resultierenden Bewertungsparameter 601 durchgeführt, die hier eine glättende Wirkung hat (Glättungsfilter), wobei die Gewichte hier 1 oder 2 betragen. Da die Summe der Gewichte hier 14 beträgt, weist das Ergebnis einen Wertebereich von 0 bis 14 * 99 = 1386 auf. So entspricht der Referenzpixel 6 beispielsweise dem Pixel des Bildsensors, durch welchen der erste Bildausschnitt 2 erfasst wird. Der links neben dem Referenzpixel 6 gelegene benachbarte Pixel 7 entspricht einem Pixel des Bildsensors, durch den ein dem ersten Bildausschnitt 2 benachbarter Bildausschnitt 4 erfasst wird.

Der so stabilisierte resultierende Bewertungsparameter 601 wird als ein Ausgangswert $s_2$ ausgegeben und kann optional mit einer Schwelle $T_2$ verglichen werden, die z. B. einen Wert von "700" aufweist. Alternativ zu dieser Schwellwertentscheidung kann auch eine Quantisierung stattfinden, die z. B. den 0 - 1386 Wertebereich auf einen kleineren Wertebereich von z. B. 0 - 7 abbildet.

Alle genannten Zahlen sind lediglich als Beispiele zu betrachten. Das durch den Stabilisierungsblock 700 bereitgestellte Glättungfilter ist nicht zwingend symmetrisch aufgebaut, und es muss auch nicht dicht besetzt sein. Beliebige Formen und Ausdehnungen können sich als vorteilhaft erweisen und können beispielsweise experimentell ermittelt werden.

Die räumliche gewichtete Summation erfordert i. allg. eine Zwischen-Pufferung der resultierenden Bewertungsparameter 601 und führt i. allg. auch zu einer Verzögerung, weil das Endergebnis für das jeweilige (Referenz-)Pixel erst berechnet werden kann, wenn alle weiteren Zwischenergebnisse vorliegen.

Die gewichtete Summation kann zusätzlich oder alternativ auch in zeitlicher Richtung durchgeführt werden. Dazu werden z. B. zwischen-gepufferte Zwischenergebnisse aus einer früheren Berechnung (z. B. für das Vorgängerbild) mit einbezogen. Diese Einbeziehung erfolgt gegebenenfalls unter Nutzung einer Bewegungskompensation, beispielsweise zur Kompensation einer Rotation einer Kamera, welche den Bildsensor umfasst.

Das Ergebnis des Stabilisierungsblocks 700 ist eine Entscheidung (im Falle eines binären Ergebnisses) oder eine Bewertung (im Falle eines mehr als binärwertigen Ergebnisses) über das Rauschen am jeweiligen Pixel. Die binären Werte können dabei die folgende Interpretation haben. Am Ausgang des Stabilisierungsblocks 700 wird dabei der stabilisierte resultierende Bewegungsparameter 701 bereitgestellt. Der Stabilisierungsblock 700 ist optional. Die um Folgenden beschriebenen Bedeutungen der Werte des stabilisierten resultierenden Bewegungsparameters 601 können in gleicher Weise unmittelbar auf den (nicht stabilisierten) resultierenden Bewegungsparameters 601 angewendet werden.

Ist der stabilisierte resultierende Bewegungsparameter 701 oder der resultierende Bewegungsparameter 601 ein binärer Wert, so kann dieser wie folgt interpretiert werden:

Wert = 0 bedeutet: Der für dieses Pixel bestimmte Merkmalsvektor ist wahrscheinlich vom Rauschen signifikant beeinflusst und sollte daher nicht für die Korrespondenzbildung (oder eine andere Weiterverarbeitung) verwendet werden.

Wert = 1 bedeutet: Der Merkmalsvektor ist wahrscheinlich nicht vom Rauschen beeinflusst und kann daher für die Korrespondenzbildung usw. verwendet werden.

Bei einer Quantisierung des stabilisierten resultierenden Bewegungsparameters 701 oder des resultierenden Bewegungsparameters 601 auf vier Werte kann die Interpretation lauten:

Wert = 0 bedeutet: Der Merkmalsvektor ist wahrscheinlich vom Rauschen beeinflusst und wird daher nicht für die Korrespondenzbildung verwendet.

Wert = 1 bedeutet: Der Merkmalsvektor kann vom Rauschen beeinflusst sein. Ergebnissen, die mit oder für diesen Merkmalsvektor gewonnen werden, sollte daher kein allzu großes Vertrauen geschenkt werden.

Wert = 2 bedeutet: Der Merkmalsvektor ist wahrscheinlich nicht vom Rauschen beeinflusst und kann daher für die Korrespondenzbildung normal verwendet werden.

Wert = 3 bedeutet: Der Merkmalsvektor ist nicht vom Rauschen beeinflusst. Er ist so deutlich vom Rauschniveau entfernt, dass den entsprechenden Ergebnissen besonderes Vertrauen geschenkt werden kann.

Die gewählte Reihenfolge des Kombinationsblocks 600 und des Stabilisierungsblocks 700 ist hier lediglich beispielhaft zu verstehen. Sie kann auch umgekehrt sein, um zuerst die räumliche/zeitliche Nachbarschaft einzubeziehen und anschließend eine Informationsverdichtung zu erreichen. Auch können die Funktionen dieser Blöcke 600, 700 gegenseitig ineinander verwoben sein und in einem gemeinsamen Block dargestellt werden.

Zusammenfassend ermöglicht das erfindungsgemäße Verfahren eine Zusatzinformation zu einem Merkmal anzugeben, die in Abhängigkeit des "Abstands zum Rauschen" ein mehr oder weniger großes Vertrauen in dieses Merkmal ausdrückt, wobei dieses Vertrauens- oder Gütemaß sehr kompakt beschrieben sein kann (z. B. mit 1 Bit oder mit wenigen Bits) und an nachfolgende Algorithmen weitergereicht oder zur weiteren Verwendung effizient gespeichert werden kann.

In der bevorzugten Ausführungsform wird die erfindungsgemäße Information pro Pixel bzw. pro Merkmal ermittelt und angehängt. Es ist jedoch auch möglich, diese seltener zu ermitteln und bereitzustellen, beispielsweise jeweils für eine Gruppe von Pixel oder Merkmalen oder aber als Binärbild, das dann mit bekannten Methoden zur Datenkompression codiert und decodiert werden kann. In diesem Fall ist auch eine Repräsentation mit weniger als 1 Bit pro Pixel bzw. Merkmal möglich.

**Patentansprüche**

1. Verfahren zur Bewertung von Bildausschnitten für eine Korrespondenzbildung, wobei einander entsprechende Merkmale in zwei einzelnen Bildern ermittelt werden, umfassend:

- Empfangen eines Bildsignals (10) von einem Bildsensor,
- Auswerten des Bildsignals (10), um zu bestimmen, in welchem Umfang für einen ausgewählten Bereich des Bildsensors ein durch den Bildsensor verursachtes Rauschen vorliegt, und
- Ermitteln eines resultierenden Bewertungsparameters (601) für einen Bildausschnitt (2, 3) eines von dem Bildsensor erfassten Bildes, welcher beschreibt, ob der Bildausschnitt (2, 3) für eine Korrespondenzbildung geeignet ist, wobei der Bildausschnitt (2, 3) dem ausgewählten Bereich des Bildsensors entspricht und wobei der resultierende Bewertungsparameter (601) basierend auf dem bestimmten Umfang des Rauschens ermittelt wird,

**dadurch gekennzeichnet, dass**
für den ausgewählten Bereich des Bildsensors jeweils ein anteiliger Umfang des Rauschens in unterschiedlichen Signalpfaden bestimmt wird, dadurch dass das Bildsignal (10) in den unterschiedlichen Signalpfaden jeweils unterschiedlich gefiltert wird, und der resultierende Bewertungsparameter (601) für den Bildausschnitt (2, 3) basierend auf dem jeweiligen anteiligen Umfang des Rauschens aus allen Signalpfaden bestimmt wird.

2. Verfahren gemäß dem Anspruch 1, **dadurch gekennzeichnet, dass** jedem anteiligen Umfang des Rauschens jeweils unterschiedliche Frequenzbereiche des Bildsignals zugehörig sind.

3. Verfahren gemäß einem der Ansprüche 1 bis 2, **dadurch gekennzeichnet, dass** aus jedem anteiligen Umfang des Rauschens ein vorläufiger Bewertungsparameter (501, 502, 503, ..., 599) ermittelt wird und die vorläufigen Bewertungsparameter (501, 502, 503, ..., 599) zu dem resultierenden Bewertungsparameter (601) zusammengefasst werden.

4. Verfahren gemäß einem der voranstehenden Ansprüche, **dadurch gekennzeichnet, dass** auf das Bildsignal (10) eine Dynamikkompression angewendet wird, bevor das Auswerten des Bildsignals (10) erfolgt.

5. Verfahren gemäß einem der voranstehenden Ansprüche, **dadurch gekennzeichnet, dass** der resultierende Bewertungsparameter (601) ein binärer Wert ist, einen Grad einer Eignung zur Korrespondenzbildung in mehreren Stufen angibt oder ein vektorieller Wert ist.

6. Verfahren gemäß einem der voranstehenden Ansprüche, **dadurch gekennzeichnet, dass** das Auswerten des Bildsignals (10), um einen Umfang des Rauschens zu bestimmen, für mehrere ausgewählte Bereiche des Bildsensors erfolgt, um mehrere resultierende Bewertungsparameter (601) zu ermitteln.

7. Verfahren gemäß Anspruch 6, **dadurch gekennzeichnet, dass** auf einen der resultierenden Bewertungsparameter (601), welcher einem ersten Bildausschnitt (2) zugehörig ist, eine Stabilisierungsfunktion angewendet wird, wobei eine örtliche und/oder zeitliche Filterung anhand benachbarter resultierender Bewertungsparameter (601) erfolgt.

8. Vorrichtung zur Bewertung von Bildausschnitten für eine Korrespondenzbildung, wobei einander entsprechende Merkmale in zwei einzelnen Bildern ermittelt werden, umfassend:

- eine Eingangsstufe (50), welche dazu eingerichtet ist, ein Bildsignal (10) von einem Bildsensor zu empfangen, und
- eine Auswertungsstufe, welche dazu eingerichtet ist:

• das Bildsignal (10) auszuwerten, um zu bestimmen, in welchem Umfang für einen ausgewählten Bereich des Bildsensors ein durch den Bildsensor verursachtes Rauschen vorliegt,
• einen resultierenden Bewertungsparameter (601) für einen Bildausschnitt (2, 3) eines von dem Bildsensor erfassten Bildes zu ermitteln, welcher beschreibt, ob der Bildausschnitt (2, 3) für eine Korrespondenzbildung geeignet ist, wobei der Bildausschnitt (2, 3) dem ausgewählten Bereich des Bildsensors entspricht und wobei der resultierende Bewertungsparameter (601) basierend auf dem bestimmten Umfang des Rauschens ermittelt wird,

**dadurch gekennzeichnet, dass**
für den ausgewählten Bereich des Bildsensors jeweils ein anteiliger Umfang des Rauschens in unterschiedlichen Signalpfaden bestimmt wird, dadurch dass das Bildsignal (10) in den unterschiedlichen Signalpfaden jeweils unterschiedlich gefiltert wird, und der resultierende Bewertungsparameter (601) für den Bildausschnitt (2, 3) basierend auf dem jeweiligen anteiligen Umfang des Rauschens aus allen Signalpfaden bestimmt wird.

**Claims**

1. Method for assessing image details for forming a correspondence, wherein mutually corresponding features in two individual images are ascertained, comprising:

    - receiving an image signal (10) from an image sensor,
    - evaluating the image signal (10) to determine to what extent noise caused by the image sensor is present for a selected region of the image sensor, and
    - ascertaining a resulting assessment parameter (601) for an image detail (2, 3) of an image captured by the image sensor, which assessment parameter (601) describes whether the image detail (2, 3) is suitable for forming a correspondence, wherein the image detail (2, 3) corresponds to the selected region of the image sensor and wherein the resulting assessment parameter (601) is ascertained based on the determined extent of the noise, **characterized in that** for the selected region of the image sensor in each case a proportional extent of the noise in different signal paths is determined, **in that** the image signal (10) in the different signal paths is in each case differently filtered, and the resulting assessment parameter (601) for the image detail (2, 3) is determined based on the respective proportional extent of the noise from all signal paths.

2. Method according to Claim 1, **characterized in that** in each case different frequency regions of the image signal are associated with each proportional extent of the noise.

3. Method according to one of Claims 1 to 2, **characterized in that** a preliminary assessment parameter (501, 502, 503, ..., 599) is ascertained from each proportional extent of the noise and the preliminary assessment parameters (501, 502, 503, ..., 599) are combined to form the resulting assessment parameter (601) .

4. Method according to one of the preceding claims, **characterized in that** dynamic compression is applied to the image signal (10) before the image signal (10) is evaluated.

5. Method according to one of the preceding claims, **characterized in that** the resulting assessment parameter (601) is a binary value, indicates a degree of suitability for forming a correspondence in multiple stages, or is a vectorial value.

6. Method according to one of the preceding claims, **characterized in that** the evaluation of the image signal (10) for determining an extent of the noise is performed for a plurality of selected regions of the image sensor so as to ascertain a plurality of resulting assessment parameters (601).

7. Method according to Claim 6, **characterized in that** a stabilization function is applied to one of the resulting assessment parameters (601) that is associated with a first image detail (2), wherein spatial and/or temporal filtering is effected on the basis of neighbouring resulting assessment parameters (601).

8. Apparatus for assessing image details for forming a correspondence, wherein mutually corresponding features in two individual images are ascertained, comprising:

    - an input stage (50) configured for receiving an image signal (10) from an image sensor and
    - an evaluation stage configured for:

        • evaluating the image signal (10) to determine to what extent noise caused by the image sensor is present for a selected region of the image sensor,
        • ascertaining a resulting assessment parameter (601) for an image detail (2, 3) of an image captured by the image sensor, which assessment parameter (601) describes whether the image detail (2, 3) is suitable for forming a correspondence, wherein the image detail (2, 3) corresponds to the selected region of the image sensor and wherein the resulting assessment parameter (601) is ascertained based on the determined extent of the noise, **characterized in that** for the selected region of the image sensor in each case a proportional extent of the noise in different signal paths is determined, **in that** the image signal (10) in the different signal paths is in each case differently filtered, and the resulting assessment parameter (601) for the image detail (2, 3) is determined based on the respective proportional extent of the noise from all signal paths.

**Revendications**

1. Procédé permettant d'évaluer des sections d'image pour l'établissement d'une correspondance, dans lequel des particularités qui se correspondent sur deux images individuelles sont déterminées, comprenant les étapes consistant à :

   - recevoir un signal d'image (10) d'un capteur d'image,
   - évaluer le signal d'image (10) afin de déterminer l'ampleur du bruit provoqué par le capteur d'image pour une zone sélectionnée du capteur d'image, et
   - déterminer un paramètre d'évaluation résultant (601) pour une section d'image (2, 3) d'une image détectée par le capteur d'image qui décrit si la section d'image (2, 3) convient à l'établissement d'une correspondance, dans lequel la section d'image (2, 3) correspond à la zone sélectionnée du capteur d'image, et le paramètre d'évaluation résultant (601) est déterminé sur la base de l'ampleur déterminée du bruit, **caractérisé en ce que** pour la zone sélectionnée du capteur d'image respectivement une ampleur proportionnelle du bruit est déterminée sur différents chemins de signal **en ce que** le signal d'image (10) est filtré différemment respectivement sur les différents chemins de signal, et le paramètre d'évaluation résultant (601) est déterminé pour la section d'image (2, 3) sur la base de l'ampleur proportionnelle respective du bruit provenant de tous les chemins de signal.

2. Procédé selon la revendication 1, **caractérisé en ce que** différentes plages de fréquence du signal d'image sont respectivement associées à chaque ampleur proportionnelle du bruit.

3. Procédé selon l'une quelconque des revendications 1 et 2, **caractérisé en ce qu'**à partir de chaque ampleur proportionnelle du bruit, un paramètre d'évaluation provisoire (501, 502, 503, ..., 599) est déterminé, et les paramètres d'évaluation provisoires (501, 502, 503, ..., 599) sont regroupés pour former le paramètre d'évaluation résultant (601).

4. Procédé selon l'une quelconque des revendications précédentes, **caractérisé en ce qu'**une compression dynamique est appliquée au signal d'image (10) avant que l'évaluation du signal d'image (10) ne soit effectuée.

5. Procédé selon l'une quelconque des revendications précédentes, **caractérisé en ce que** le paramètre d'évaluation résultant (601) est une valeur binaire, indique un degré d'une aptitude à l'établissement d'une correspondance ou est une valeur vectorielle.

6. Procédé selon l'une quelconque des revendications précédentes, **caractérisé en ce que** l'évaluation du signal d'image (10) pour déterminer une ampleur du bruit est effectuée pour plusieurs zones sélectionnées du capteur d'image afin de déterminer plusieurs paramètres d'évaluation résultants (601).

7. Procédé selon la revendication 6, **caractérisé en ce que** sur l'un des paramètres d'évaluation résultants (601), qui appartient à une première section d'image (2), une fonction de stabilisation est appliquée, un filtrage local et/ou temporel étant effectué à l'aide de paramètres d'évaluation résultants (601) voisins.

8. Dispositif permettant d'évaluer des sections d'image pour l'établissement d'une correspondance, des particularités qui se correspondent étant déterminées sur deux images individuelles, comprenant :

   un étage d'entrée (50) qui est aménagé pour recevoir un signal d'image (10) d'un capteur d'image, et
   un étage d'évaluation qui est aménagé pour :

   • évaluer le signal d'image (10) afin de déterminer l'ampleur du bruit provoqué par le capteur d'image pour une zone sélectionnée du capteur d'image,
   • déterminer un paramètre d'évaluation résultant (601) pour une section d'image (2, 3) d'une image détectée par le capteur d'image qui décrit si la section d'image (2, 3) convient à l'établissement d'une correspondance, dans lequel la section d'image (2, 3) correspond à la zone sélectionnée du capteur d'image, et le paramètre d'évaluation résultant (601) est déterminé sur la base de l'ampleur déterminée du bruit,

**caractérisé en ce que** pour la zone sélectionnée du capteur d'image respectivement une ampleur proportionnelle du bruit est déterminée sur différents chemins de signal **en ce que** le signal d'image (10) est filtré différemment respectivement sur les différents chemins de signal, et le paramètre d'évaluation résultant (601) est déterminé pour la section d'image (2, 3) sur la base de l'ampleur proportionnelle respective du bruit provenant de tous les chemins de signal.

**FIG. 1**

**FIG. 2**

FIG. 3

FIG. 4

FIG. 5

FIG. 6

**FIG. 7**

**IN DER BESCHREIBUNG AUFGEFÜHRTE DOKUMENTE**

**In der Beschreibung aufgeführte Patentdokumente**

- EP 2275990 B1
- WO 2008087104 A1
- US 2015269735 A1